# EUROPEAN PATENT APPLICATION

(11) **EP 4 454 911 A1**
(43) Date of publication of application: **30.10.2024**
(21) Application number: 23766024.6
(22) Date of filing: 08.03.2023
(51) Int. Cl.: B60J 10/265, B60J 10/30, B60J 10/70

(54) **HEMMING STRUCTURE AND VEHICLE**

(30) Priority: 09.03.2022 CN 202210231939
(71) Applicant: Fuyao Glass Industry Group Co., Ltd., Fuqing, Fujian 350300 (CN)
(72) Inventor: OU, Xiuyong, Fuqing, Fujian 350300 (CN); CHEN, Hua, Fuqing, Fujian 350300 (CN); SHI, Xiaofeng, Fuqing, Fujian 350300 (CN); LIN, Hui, Fuqing, Fujian 350300 (CN); CAO, Limin, Fuqing, Fujian 350300 (CN)
(74) Representative: Tarabbia, Luigi
(86) International application number: PCT/CN2023/080188
(87) International publication number: WO 2023/169446

(57) **Abstract**

A hemming structure and a vehicle. The hemming structure comprises a main body (100), an accessory piece (200) and a movable piece (300). The main body (100) is internally provided with a clamping cavity (101). The main body (100) is provided with a first assembling hole (102) in communication with the clamping cavity (101). The accessory piece (200) is provided with a fastener (210). The outer side of the fastener (210) is provided with a limiting protrusion (220). When the fastener (210) is being pressed, the limiting protrusion (220) can pass through the first assembling hole (102). When the limiting protrusion (220) enters the clamping cavity (101) from the first assembling hole (102), the fastener (210) changes from a pressed state to a recovered state. The limiting protrusion (220) abuts against the inner wall of the clamping cavity (101). The active piece (300) is provided on the side of the main body (100) away from the accessory piece (200). The active piece (300) is movably matched with the main body (100) and at least partially extends into the clamping cavity (101). The active piece (300) can move relative to the main body (100) and presses the fastener (210), so that the fastener (210) changes from a recovered state to a pressed state.

## Description

### CROSS-REFERENCE TO RELATED APPLICATIONS

This application claims priority to Chinese Patent Application No. 2022102319393, entitled "ENCAPSULATION STRUCTURE AND VEHICLE" and filed on March 9, 2022, the entire contents of which are incorporated herein by reference.

### TECHNICAL FIELD

The present disclosure relates to the field of encapsulation assembly technologies, and in particular, to an encapsulation structure and a vehicle.

### BACKGROUND

With the continuous improvement of living standards and aesthetic standards, consumers have put forward higher requirements for appearance of cars. As parts that decorate the appearance of the cars, automotive decorative members can enhance overall appearance of the cars and are widely used.

The decorative members are generally installed on encapsulation materials of automobile windows to serve as decoration and sealing. Generally, the decorative members are installed in such a manner that they are difficult to disassemble and replace. If the decorative members can be disassembled directly from the outside, it may lead to poor anti-theft properties.

### SUMMARY

According to various embodiments of the present disclosure, an encapsulation structure and a vehicle are provided that are easy to disassemble and assemble and have a good anti-theft performance.

The technical solution is as follows.

An encapsulation structure includes:
a main body provided with an engaging cavity therein, and the main body is provided with a first assembling hole in communication with the engaging cavity;
a decorative member provided with a buckle, an outer side of the buckle is provided with a limiting protrusion, the buckle has a squeezed state and a recovered state, when the buckle is squeezed to enable the buckle to switch from the recovered state to the squeezed state, the limiting protrusion is capable of passing through the first assembling hole, and when the limiting protrusion enters the engaging cavity from the first assembling hole, the buckle switches from the squeezed state to the recovered state, and the limiting protrusion abuts against an inner wall of the engaging cavity; and
an active member provided on a side of the main body away from the decorative member, the active member is movably matched with the main body and at least partially extends into the engaging cavity, and the active member is capable of moving relative to the main body and presses the buckle, so that the buckle switches from the recovered state to the squeezed state.

In an embodiment, the buckle includes at least two elastic buckling bodies, all of the elastic buckling bodies are provided with the limiting protrusion, two different elastic buckling bodies are spaced apart, when the buckle is in the squeezed state, the elastic buckling bodies are elastically deformed, and a distance between the limiting protrusions on the two different elastic buckling bodies decreases, and when the limiting protrusions enter the engaging cavity from the first assembling hole, the elastic buckling bodies are reset, the buckle switches from the squeezed state to the recovered state, and the distance between the limiting protrusions on the two different elastic buckling bodies increases.

In an embodiment, an end face of an end of the active member configured to extend into the engaging cavity is provided with a groove, the active member moves in a direction close to or away from the buckle, a side of the limiting protrusion close to the active member is a first contact surface, the first contact surface is an inclined surface or an arc surface, and when the active member moves in the direction close to the buckle, different limiting protrusions respectively extend into the groove, a groove wall of the groove contacts the first contact surface and exerts a force on the limiting protrusions, so that the limiting protrusions are squeezed, the buckle switches from the recovered state to the squeezed state, and the distance between the limiting protrusions on the two different elastic buckling bodies decreases.

In an embodiment, a side of the limiting protrusion away from the active member is a second contact surface, the second contact surface is an inclined surface or an arc surface, and a distance between the second contact surface and the elastic buckling bodies gradually decreases in a direction away from the active member.

In an embodiment, a side of the main body away from the first assembling hole is provided with a second assembling hole in communication with the engaging cavity, the active member is rotatably provided in the second assembling hole, the end of the active member configured to extend into the engaging cavity is a push end, the push end being externally provided with a flange surrounding a position of the push end, the inner wall of the engaging cavity includes a first wall and a second wall arranged oppositely, a communication point between the first assembling hole and the engaging cavity is located on the first wall, a communication point between the second assembling hole and the engaging wall is located on the second wall, the inner wall of the engaging cavity is provided with a stop protrusion, a distance between the stop protrusion and the second wall is greater than a thickness of the flange, and the flange is provided with a notch allowing the stop protrusion to pass through.

In an embodiment, when the limiting protrusion is located in the engaging cavity, the first contact surface abuts against the groove wall of the groove.

In an embodiment, an inner diameter of the groove is less than or equal to a diameter of the first assembling hole.

In an embodiment, the encapsulation structure further includes a first sealing member and a second sealing member, the first sealing member being arranged between the decorative member and the main body, the first sealing member being arranged around the buckle, the second sealing member being arranged on the side of the main body away from the decorative member, and the second sealing member being arranged around the active member.

In an embodiment, the main body includes an encapsulation, a glass plate, and a reinforcing member, the encapsulation is connected to an edge of the glass plate and the reinforcing member respectively, the reinforcing member and the decorative member are located on two sides of the encapsulation respectively, the engaging cavity and the first assembling hole are both arranged on the reinforcing member, the encapsulation is provided with an avoiding hole arranged corresponding to the first assembling hole, and the buckle passes through the avoiding hole and the first assembling hole sequentially and extends into the engaging cavity.

A vehicle includes the encapsulation structure as described in any one of the above embodiments.

### BRIEF DESCRIPTION OF THE DRAWINGS

In order to more clearly illustrate the technical solutions in embodiments of the present disclosure or the conventional art, the accompanying drawings used in the description of the embodiments or the conventional art will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a perspective view of an encapsulation structure according to embodiments of the present disclosure;
FIG. 2 is a partial top view of the encapsulation structure according to embodiments of the present disclosure;
FIG. 3 is a cross-sectional view taken along A-A in FIG. 2;
FIG. 4 is a cross-sectional view of a buckle according to embodiments of the present disclosure;
FIG. 5 is a first schematic view showing matching between a main body and an active member according to embodiments of the present disclosure;
FIG. 6 is a second schematic view showing matching between the main body and the active member according to embodiments of the present disclosure; and
FIG. 7 is a cross-sectional view taken along B-B in FIG. 2.

### Reference signs:

100. main body; 101. engaging cavity; 102. first assembling hole; 110. stop protrusion; 120. encapsulation; 121. avoiding hole; 130. glass plate; 140. reinforcing member; 200. decorative member; 210. buckle; 211. elastic buckling body; 220. limiting protrusion; 221. first contact surface; 222. second contact surface; 300. active member; 301. groove; 310. flange; 311. notch; 400. first sealing member; 500. second sealing member.

### DETAILED DESCRIPTION OF EMBODIMENTS

The technical solutions in the embodiments of the present disclosure will be described clearly and completely below with reference to the accompanying drawings in the embodiments of the present disclosure. The described embodiments are merely some of rather than all of the embodiments of the present disclosure. All other embodiments acquired by those skilled in the art without creative efforts based on the embodiments of the present disclosure shall fall within the protection scope of the present disclosure.

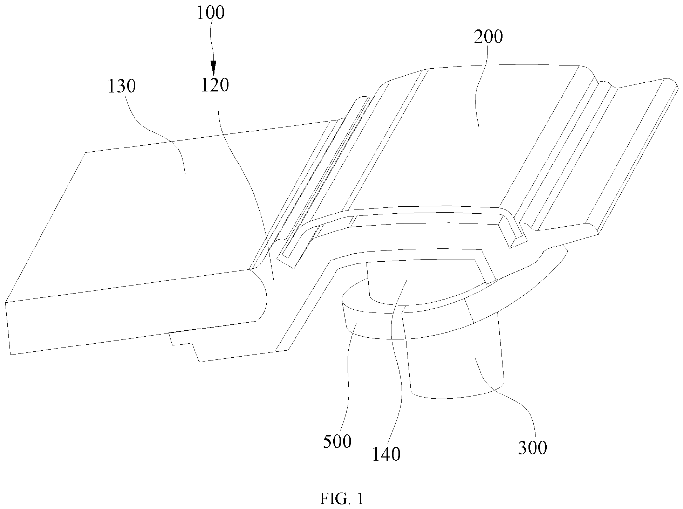

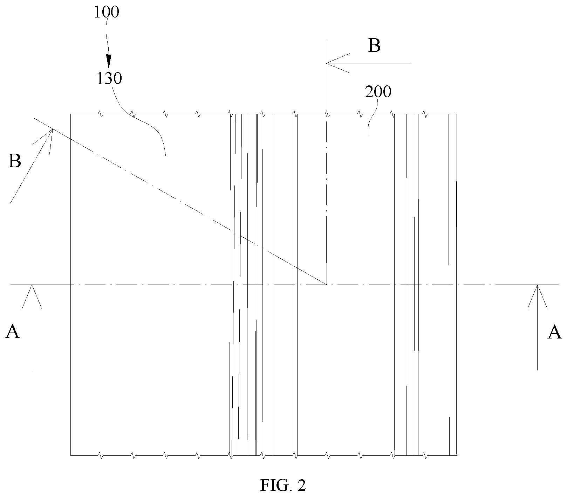

As shown in FIG. 1 to FIG. 4, an embodiment discloses an encapsulation structure (not labeled), including a main body 100, a decorative member 200, and an active member 300. The main body 100 is provided with an engaging cavity 101 therein. The main body 100 is provided with a first assembling hole 102 in communication with the engaging cavity 101. The decorative member 200 is provided with a buckle 210. An outer side of the buckle 210 is provided with a limiting protrusion 220. The buckle 210 has a squeezed state and a recovered state. When the buckle 210 is squeezed to enable the buckle 210 to switch from the recovered state to the squeezed state, the limiting protrusion 220 can pass through the first assembling hole 102. When the limiting protrusion 220 enters the engaging cavity 101 from the first assembling hole 102, the buckle 210 switches from the squeezed state to the recovered state, and the limiting protrusion 220 abuts against an inner wall of the engaging cavity 101. The active member 300 is provided on the side of the main body 100 away from the decorative member 200. The active member 300 is movably matched with the main body 100 and at least partially extends into the engaging cavity 101. The active member 300 can move relative to the main body 100 and squeezes the buckle 210, so that the buckle 210 switches from the recovered state to the squeezed state.

According to the above encapsulation structure, when it is required to assemble the decorative member 200 to the main body 100, the buckle 210 on the decorative member 200 can be squeezed to enable the buckle 210 to switch from the recovered state to the squeezed state. At this time, the buckle 210 may enter the engaging cavity 101 through the first assembling hole 102. When the buckle 210 enters the engaging cavity 101, since the buckle 210 receives less or no squeezing force, the buckle 210 can switch from the squeezed state to the recovered state. At this time, the limiting protrusion 220 on the buckle 210 can abut against the inner wall of the engaging cavity 101, so as to prevent the buckle 210 from passing through the first assembling hole 102 in a direction away from the engaging cavity 101, thus achieving engaging and assembling of the decorative member 200 and the main body 100. When it is required to separate the decorative member 200 from the main body 100, the active member 300 can be moved to enable the active member 300 to move in the engaging cavity 101 relative to the main body 100. At this time, the active member 300 can squeeze the buckle 210 to enable the buckle 210 to switch from the recovered state to the squeezed state again. At this time, the buckle 210 can pass through the first assembling hole 102 again and be disengaged from the engaging cavity 101. Therefore, the decorative member 200 and the main body 100 are detachably matched, and the decorative member 200 can be replaced. Moreover, disassembly and assembly can be realized by moving the active member 300, making the disassembly and assembly easier. The decorative member 200 is generally arranged outwards, the active member 300 is located on a side of the main body 100 away from the decorative member 200, such that the decorative member 200 cannot be directly disassembled from the side where the decorative member 200 is located relative to the main body 100, therefore an anti-theft effect is improved in use.

In addition, when the decorative member 200 is engaged with the main body 100, part of the buckle 210 is located in the engaging cavity 101. At this time, the buckle 210 cannot be directly squeezed, and it is required to squeeze the buckle 210 by moving the active member 300. That is, after the decorative member 200 is engaged with the main body 100, the operation of separating the decorative member 200 from the main body 100 can only be performed through the active member 300, which can prevent separation of the decorative member 200 from the main body 100 caused by squeezing of the buckle 210 in the case of positional interference or the like, so that structural stability is improved after the decorative member 200 is engaged with the main body 100.

A force may be exerted on the buckle 210 to squeeze the buckle 210. At this time, the maximum size of the buckle 210 is reduced, and the buckle 210 can enter the first assembling hole 102. When the buckle 210 enters the first assembling hole 102 and passes through the first assembling hole 102, an outer wall of the buckle 210 may abut against a hole wall of the first assembling hole 102. Specifically, the limiting protrusion 220 on the buckle 210 abuts against the hole wall of the first assembling hole 102. At this time, the buckle 210 is still in the squeezed state. As the limiting protrusion 220 on the buckle 210 enters the engaging cavity 101 through the first assembling hole 102, at least part of the limiting protrusion 220 no longer abuts against the hole wall of the first assembling hole 102. At this time, the buckle 210 may switch from the squeezed state to the recovered state, the limiting protrusion 220 is displaced to some extent and can abut against the inner wall of the engaging cavity 101. An overall size of the buckle 210 is increased, which can prevent the buckle 210 from separating the first assembling hole 102, thus achieving the engagement between the decorative member 200 and the main body 100.

A size of the engaging cavity 101 is greater than a diameter of the first assembling hole 102, such that during the entry of the limiting protrusion 220 into the engaging cavity 101 through the first assembling hole 102, the limiting protrusion 220 is displaced by a certain distance along a radial direction of the first assembling hole 102, such that the buckle 210 can switch from the squeezed state to the recovered state.

Optionally, when the limiting protrusion 220 enters the engaging cavity 101 and the buckle 210 switches to the recovered state, the limiting protrusion 220 and the buckle 210 are still squeezed to some extent. However, the buckle 210 cannot pass through the first assembling hole 102 at this time.

In one of the embodiments, as shown in FIG. 1 to FIG. 4, the buckle 210 includes at least two elastic buckling bodies 211, and all of the elastic buckling bodies 211 are provided with the limiting protrusion 220. Two different elastic buckling bodies 211 are spaced apart. When the buckle 210 is in the squeezed state, the elastic buckling bodies 211 are elastically deformed, and a distance between the limiting protrusions 220 on the two different elastic buckling bodies 211 decreases. When the limiting protrusions 220 enter the engaging cavity 101 through the first assembling hole 102, the elastic buckling bodies 211 are reset, the buckle 210 switches from the squeezed state to the recovered state, and the distance between the limiting protrusions 220 on the two different elastic buckling bodies 211 increases. At this time, after the elastic buckling bodies 211 enter the engaging cavity 101 from the first assembling hole 102, the elastic buckling bodies 211 may be reset, so that the limiting protrusion 220 undergoes a certain displacement from the state of abutting against the hole wall of the first assembling hole 102, and the distance between the limiting protrusions 220 on the two different elastic buckling bodies 211 increases, which can be engaged in the engaging cavity 101, thereby preventing the buckle 210 from detaching the first assembling hole 102, thus making the engagement between the decorative member 200 and the main body 100 more stable.

Optionally, two elastic buckling bodies 211 are provided, and the two elastic buckling bodies 211 are spaced apart. However, in other embodiments, a plurality of elastic buckling bodies 211 may be provided, all of the elastic buckling bodies 211 are spaced apart along a circumferential direction. An avoiding space is formed between all of the elastic buckling bodies 211, and the limiting protrusion 220 is provided on a side of the elastic buckling bodies 211 away from the avoiding space.

In other embodiments, the buckle 210 may include two supports, all of the supports are provided with the above limiting protrusion 220. At least one of the supports is movably matched with the decorative member 200, so that a distance between two supports is adjustable. The two supports are provided with a spring. When the buckle 210 is squeezed, the supports are squeezed, the distance between the two supports may be shortened, and the spring is squeezed. At this time, the buckle 210 is in the squeezed state and can pass through the first assembling hole 102. After the limiting protrusion 220 enters the engaging cavity 101, the limiting protrusion 220 no longer abuts against the hole wall of the first assembling hole 102. At this time, a resetting effect of the spring may increase the distance between the limiting protrusions 220 on the two supports, so that the buckle 210 switches to the recovered state and cannot pass through the first assembling hole 102.

Alternatively, the buckle 210 is an elastic member. When the buckle 210 is squeezed and elastically deformed, the buckle 210 switches to the squeezed state. At this time, the limiting protrusion 220 on the buckle 210 may be displaced, the maximum outer diameter of the buckle 210 is reduced, and the buckle can pass through the first assembling hole 102. When the buckle 210 enters the engaging cavity 101, the buckle 210 is recovered. At this time, the limiting protrusion 220 may be engaged in the engaging cavity 101, causing the maximum outer diameter of the buckle 210 to increase. As a result, the buckle 210 cannot pass through the first assembling hole 102 to realize the engagement between the decorative member 200 and the main body 100.

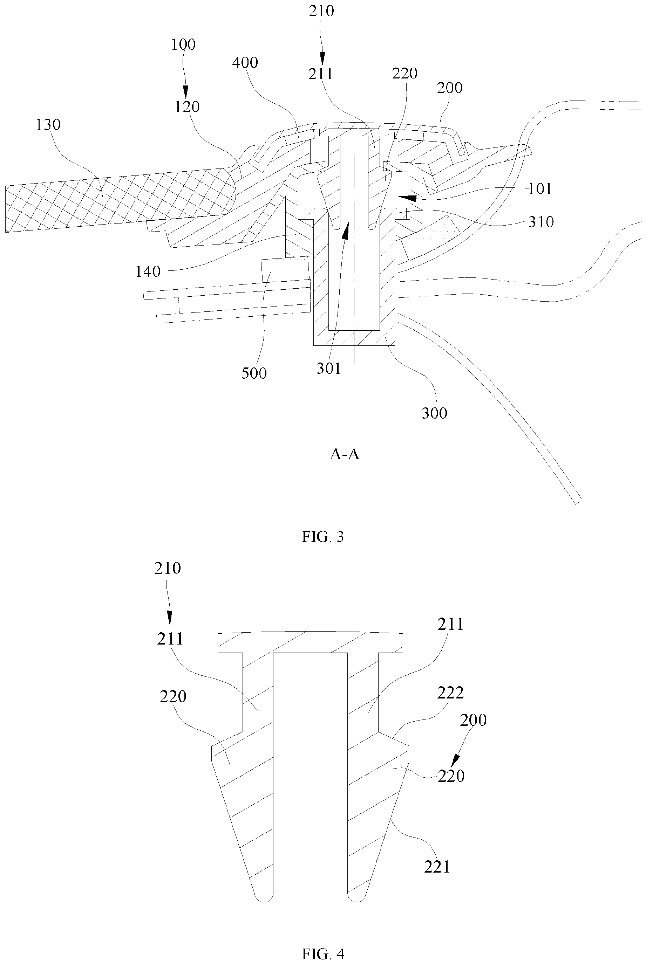

In an embodiment, as shown in FIG. 3 and FIG. 4, an end face of an end of the active member 300 configured to extend into the engaging cavity 101 is provided with a groove 301. The active member 300 moves in a direction close to or away from the buckle 210. A side of the limiting protrusion 220 close to the active member 300 is a first contact surface 221, and the first contact surface 221 is an inclined surface or an arc surface. When the active member 300 moves in the direction close to the buckle 210, different limiting protrusions 220 respectively extend into the groove 301. A groove wall of the groove 301 contacts the first contact surface 221 and exerts a force on the limiting protrusions 220, so that the limiting protrusions 220 are squeezed, the buckle 210 switches from the recovered state to the squeezed state, and the distance between the limiting protrusions 220 on the two different elastic buckling bodies 211 decreases. At this time, by pushing the active member 300, the active member 300 is close to the buckle 210 in the engaging cavity 101, and the buckle 210 may extend into the groove 301 of the active member 300. As a distance of the buckle 210 extending into the groove 301 increases, the groove wall of the groove 301 may exert a force on the first contact surface 221, causing the limiting protrusion 220 to be stressed and causing the buckle 210 to be squeezed. At this time, the buckle 210 switches from the recovered state to the squeezed state, a distance between the limiting protrusions 220 on two different elastic buckling bodies 211 decreases, and the buckle 210 may pass through the first assembling hole 102 again, which may realize separation of the decorative member 200 from the main body 100 and is easy to operate.

Optionally, an end of the groove wall of the groove 301 close to the buckle 210 is a tapered surface, and an inner diameter of the tapered surface gradually increases in a direction close to the buckle 210, which can better match the shape of the first contact surface 221, increase a contact area, and reduce damage to the first contact surface 221.

In other embodiments, the number of the active member 300 corresponds to the number of the elastic buckling body 211. For example, when the number of the elastic buckling body 211 is two, the number of the active member 300 is also two. One active member 300 moves relative to the main body 100 and can abut against one elastic buckling body 211, so as to squeeze the elastic buckling body 211 and move the elastic buckling body 211 close to another elastic buckling body 211. At this time, two active members 300 may be moved simultaneously, so that the two active members 300 squeeze two elastic buckling bodies 211 respectively to cause the two elastic buckling bodies 211 to be close to each other, thereby reducing a distance between the limiting protrusions 220 on the two elastic buckling bodies 211. At this time, the buckle 210 switches from the recovered state to the squeezed state and can pass through the first assembling hole 102 again.

In an embodiment, as shown in FIG. 3 and FIG. 4, a side of the limiting protrusion 220 away from the active member 300 is a second contact surface 222, the second contact surface 222 is an inclined surface or an arc surface, and a distance between the second contact surface 222 and the elastic buckling bodies 211 gradually decreases in a direction away from the active member 300. The second contact surface 222 can facilitate the buckle 210 to smoothly enter the first assembling hole 102 when the active member 300 squeezes the elastic buckling body 211. At the same time, when the limiting protrusion 220 partially enters the engaging cavity 101 from the first assembling hole 102, the contact between the limiting protrusion 220 and the main body 100 may cause the limiting protrusion 220 to be subjected to a force in a direction from the first assembling hole 102 to the engaging cavity 101, so that the decorative member 200 and the main body 100 are engaged.

Specifically, when the decorative member 200 is engaged with the main body 100, the limiting protrusion 220 is partially located in the engaging cavity 101, so that the second contact surface 222 is in contact with a junction between the hole wall of the first assembling hole 102 and the inner wall of the engaging cavity 101. At this time, the buckle 210 is subjected to a force in the direction from the first assembling hole 102 to the engaging cavity 101, so that the decorative member 200 and the main body 100 are engaged.

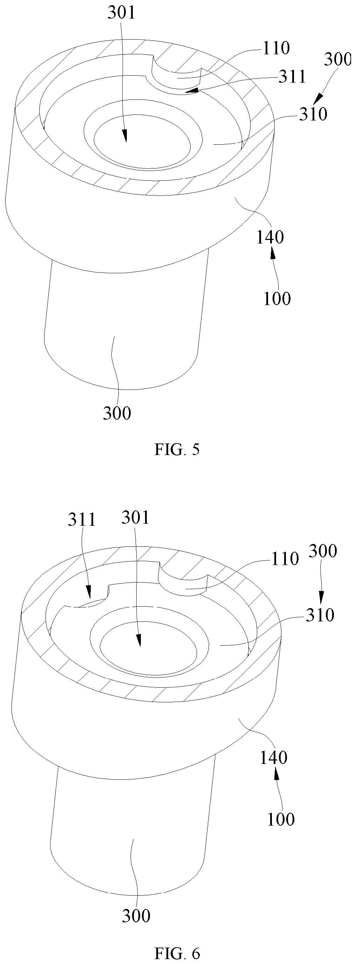

In an embodiment, as shown in FIG. 3 and FIG. 5 to FIG. 7, the side of the main body 100 away from the first assembling hole 102 is provided with a second assembling hole (not labeled) in communication with the engaging cavity 101, and the active member 300 is rotatably provided in the second assembling hole. The end of the active member 300 configured to extend into the engaging cavity 101 is a push end (not labeled), the push end is externally provided with a flange 310 surrounding the position of the push end. The inner wall of the engaging cavity 101 includes a first wall (not labeled) and a second wall (not labeled) arranged oppositely. A communication point between the first assembling hole 102 and the engaging cavity 101 is located on the first wall, a communication point between the second assembling hole and the engaging wall is located on the second wall. The inner wall of the engaging cavity 101 is provided with a stop protrusion 110, a distance between the stop protrusion 110 and the second wall is greater than a thickness of the flange 310, and the flange 310 is provided with a notch 311 allowing the stop protrusion 110 to pass through. Referring to FIG. 5, when it is required to squeeze the buckle 210 using the active member 300, the active member 300 may be rotated, so that the notch 311 on the flange 310 of the active member 300 rotates to a position corresponding to the stop protrusion 110. At this time, the active member 300 may move towards the buckle 210 through the stop protrusion 110 to squeeze the buckle 210. Referring to FIG. 6, when it is not required to use the active member 300, the active member 300 may be moved, so that the flange 310 of the active member 300 is located between the stop protrusion 110 and the second wall, and the active member 300 is rotated to stagger the stop protrusion 110 from the notch 311. At this time, the active member 300 is limited between the limiting protrusion 220 and the second wall and may not move freely. Therefore, separation of the decorative member 200 from the main body 100 due to squeezing of the buckle 210 caused by an accidental touch on the active member 300 can be prevented, ensuring stability of the engagement between the decorative member 200 and the main body 100.

In an embodiment, as shown in FIG. 3, when the limiting protrusion 220 is located in the engaging cavity 101, the first contact surface 221 abuts against the groove wall of the groove 301. When the limiting protrusion 220 extends into the engaging cavity 101, the first contact surface 221 abuts against the groove wall of the groove 301 of the active member 300, thus enabling the active member 300 and the buckle 210 to exert forces on each other. The active member 300 and the buckle 210 are fixed in the engaging cavity 101. In the above encapsulation structure, the active member 300 and the buckle 210 are not prone to displace relative to each other in a vibrating environment, which can reduce noise or abnormal noise.

In an embodiment, an inner diameter of the groove 301 is less than or equal to a diameter of the first assembling hole 102. At this time, when the groove 301 squeezes the buckle 210, the buckle 210 in the squeezed state can be ensured to pass through the first assembling hole 102 from the engaging cavity 101, thereby facilitating the separation of the decorative member 200 from the main body 100.

Specifically, the inner diameter of the groove 301 is less than the diameter of the first assembling hole 102.

In an embodiment, as shown in FIG. 3, the encapsulation structure further includes a first sealing member 400 and a second sealing member 500. The first sealing member 400 is arranged between the decorative member 200 and the main body 100, and the first sealing member 400 is arranged around the buckle 210. The second sealing member 500 is arranged on the side of the main body 100 away from the decorative member 200, and the second sealing member 500 is arranged around the active member 300. Through the first sealing member 400 and the second sealing member 500, sealing performance of the above encapsulation structure can be improved, water seepage can be prevented, and noise can be reduced.

Optionally, the first sealing member 400 and the second sealing member 500 are foam gaskets, which have good sealing effects and have certain buffering and shock-absorbing effects.

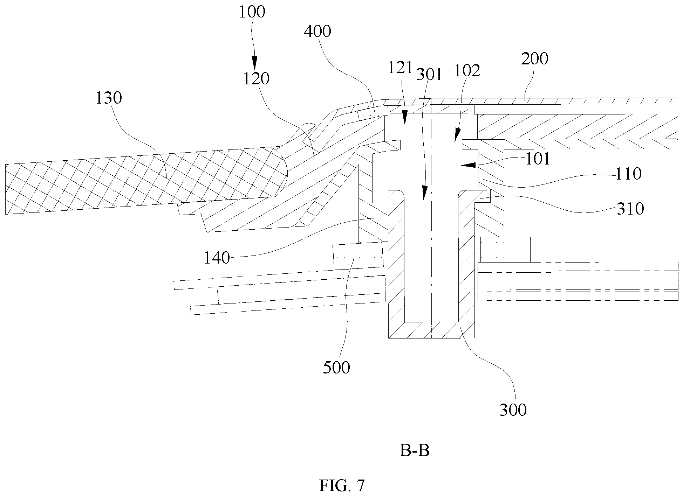

In an embodiment, as shown in FIG. 3 and FIG. 7, the main body 100 includes an encapsulation 120, a glass plate 130, and a reinforcing member 140. The encapsulation 120 is connected to an edge of the glass plate 130 and the reinforcing member 140, respectively. The reinforcing member 140 and the decorative member 200 are located on two sides of the encapsulation 120 respectively. The engaging cavity 101 and the first assembling hole 102 are both arranged on the reinforcing member 140. The encapsulation 120 is provided with an avoiding hole 121 arranged corresponding to the first assembling hole 102, and the buckle 210 passes through the avoiding hole 121 and the first assembling hole 102 sequentially and extends into the engaging cavity 101. The encapsulation 120 is located at the edge of the glass plate 130 and is connected to the glass plate 130. The reinforcing member 140 can provide structural support for the encapsulation 120. The decorative member 200 is located on the side of the encapsulation 120 away from the reinforcing member 140 and plays a decorative role.

Optionally, the decorative member 200 is in the shape of a strip, and the encapsulation 120 is provided with placement grooves that match edges on two sides of the decorative member 200 to limit the decorative member 200 and guide an installation position.

Optionally, the glass plate 130 may be made of tempered glass, laminated glass, semi-tempered laminated glass, or other glass materials.

Optionally, the encapsulation 120 may be made of polyvinyl chloride (PVC), thermoplastic elastomer (TPE), or other materials. Material hardness of the encapsulation 120 may be Shore A60 to A90.

Optionally, the decorative member 200 may be stainless steel, aluminum alloy, polymethyl methacrylate (PMMA), polycarbonate and acrylonitrile butadiene styrene (PC+ABS, engineering plastic alloy), or other materials. A side of the decorative member 200 away from the encapsulation 120 may be a high-gloss surface or a matte surface.

Optionally, the buckle 210 may be made of a plastic material, such as polyoxymethylene (POM), polypropylene with glass fiber (PP+GF), polyamide 66 with glass fiber (PA66+GF), polyamide 6 with glass fiber (PA6+GF), PC+ABS, or styrene acrylonitrile resin (SAN).

Alternatively, the buckle 210 may be made of an elastic metal material, such as spring steel.

Optionally, the reinforcing member 140 may be made of hard plastic such as PA66+GF, PA6+GF, or PP+GF, or metal such as carbon steel or stainless steel.

Optionally, the glass plate 130, the encapsulation 120, and the reinforcing member 140 may be integrally injection molded.

Optionally, the buckle 210 may be fixed to the decorative member 200 by tape bonding, PU glue bonding, hot melting, welding, or other manners.

An embodiment discloses a vehicle, including the encapsulation structure as described in any one of the above embodiments.

According to the above vehicle, when it is required to assemble the decorative member 200 with the main body 100, the buckle 210 on the decorative member 200 can be squeezed to enable the buckle 210 to switch from the recovered state to the squeezed state. At this time, the buckle 210 may enter the engaging cavity 101 through the first assembling hole 102. When the buckle 210 enters the engaging cavity 101, since the buckle 210 receives less or no squeezing force, the buckle 210 can switch from the squeezed state to the recovered state. At this time, the limiting protrusion 220 on the buckle 210 can abut against the inner wall of the engaging cavity 101 to prevent the buckle 210 from passing through the first assembling hole 102 in a direction away from the engaging cavity 101 , thus achieving engaging and assembling of the decorative member 200 and the main body 100. When it is required to separate the decorative member 200 from the main body 100, the active member 300 can be moved to enable the active member 300 to move in the engaging cavity 101 relative to the main body 100. At this time, the active member 300 can squeeze the buckle 210 to enable the buckle 210 to switch from the recovered state to the squeezed state again. At this time, the buckle 210 can pass through the first assembling hole 102 again and be disengaged from the engaging cavity 101. Therefore, the decorative member 200 and the main body 100 are detachably matched, and the decorative member 200 can be replaced. Moreover, disassembly and assembly can be realized by moving the active member 300, making the disassembly and assembly easier. The decorative member 200 is generally arranged outwards, the active member 300 is located on the side of the main body 100 away from the decorative member 200, such that the decorative member 200 cannot be directly disassembled from the side where the decorative member 200 is located relative to the main body 100, therefore an anti-theft effect is improved in use.

Specifically, the side of the reinforcing member 140 away from the encapsulation 120 is used to be connected to a vehicle body, and the second sealing member 500 is arranged between the reinforcing member 140 and the vehicle body.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the concept of the present disclosure, and these all fall within the protection scope of the present disclosure. Therefore, the patent protection scope of the present disclosure should be subject to the appended claims.

In the description of the present disclosure, the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present disclosure and simplify the description only, rather than indicating or implying that the apparatus or element referred to must have a particular orientation or be constructed and operated in a particular orientation, and therefore are not to be interpreted as limiting the present disclosure.

In the description of the present disclosure, the terms "first" and "second" are used for descriptive purposes only, which cannot be construed as indicating or implying a relative importance, or implicitly specifying the number of the indicated technical features. Thus, the features defined with "first" and "second" may explicitly or implicitly include one or more features. In the description of the present disclosure, "a plurality of" means two or more, such as two or three, unless otherwise defined explicitly and specifically.

In the present disclosure, unless otherwise specified and defined explicitly, the terms "install", "connect", "join", and "fix" should be understood in a broad sense. For example, they may refer to a fixed connection, a detachable connection, or an integral connection; may refer to a mechanical connection or electrical connection; and may refer to a direct connection, an indirect connection via an intermediate medium, an internal connection between two elements, or interaction between two elements. Those of ordinary skill in the art can understand specific meanings of these terms in the present disclosure according to specific situations.

In the present disclosure, unless otherwise specified and defined explicitly, the expression a first feature being "on" or "under" a second feature may be the case that the first feature is in direct contact with the second feature, or the first feature is in indirect contact with the second feature via an intermediate medium. Furthermore, the expression the first feature being "over", "above" and "on top of" the second feature may be the case that the first feature is directly above or obliquely above the second feature, or only means that the level of the first feature is higher than that of the second feature. The expression the first feature being "below", "underneath" or "under" the second feature may be the case that the first feature is directly underneath or obliquely underneath the second feature, or only means that the level of the first feature is lower than that of the second feature.

It should be noted that when one element is referred to as "fixed to" or "arranged on" another element, it may be directly disposed on the other element or an intermediate element may exist. When one element is considered to be "connected to" another element, it may be directly connected to the other element or an intermediate element may co-exist. The terms "vertical", "horizontal", "upper", "lower", "left", "right" and similar expressions used herein are for illustrative purposes only and do not represent the only implementation.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the concept of the present disclosure, and these all fall within the protection scope of the present disclosure. Therefore, the patent protection scope of the present disclosure should be subject to the appended claims.

## Claims

1. An encapsulation structure, comprising:
a main body provided with an engaging cavity therein, and the main body being provided with a first assembling hole in communication with the engaging cavity;
a decorative member provided with a buckle, wherein an outer side of the buckle is provided with a limiting protrusion, the buckle has a squeezed state and a recovered state, when the buckle is squeezed to enable the buckle to switch from the recovered state to the squeezed state, the limiting protrusion is capable of passing through the first assembling hole, when the limiting protrusion enters the engaging cavity from the first assembling hole, the buckle switches from the squeezed state to the recovered state, and the limiting protrusion abuts against an inner wall of the engaging cavity; and
an active member provided on a side of the main body away from the decorative member, wherein the active member is movably matched with the main body and at least partially extends into the engaging cavity, and the active member is capable of moving relative to the main body and squeezing the buckle, so that the buckle switches from the recovered state to the squeezed state.

2. The encapsulation structure according to claim 1, wherein the buckle comprises at least two elastic buckling bodies, all of the elastic buckling bodies are provided with the limiting protrusion, two different elastic buckling bodies are spaced apart, when the buckle is in the squeezed state, the elastic buckling bodies are elastically deformed, and a distance between the limiting protrusions on the two different elastic buckling bodies decreases, when the limiting protrusions enter the engaging cavity from the first assembling hole, the elastic buckling bodies are reset, the buckle switches from the squeezed state to the recovered state, and the distance between the limiting protrusions on the two different elastic buckling bodies increases.

3. The encapsulation structure according to claim 2, wherein an end face of an end of the active member configured to extend into the engaging cavity is provided with a groove, the active member moves in a direction close to or away from the buckle, a side of the limiting protrusion close to the active member is a first contact surface, the first contact surface is an inclined surface or an arc surface, when the active member moves in the direction close to the buckle, different limiting protrusions extend into the groove, respectively, a groove wall of the groove contacts the first contact surface and exerts a force on the limiting protrusions, so that the limiting protrusions are squeezed, the buckle switches from the recovered state to the squeezed state, and the distance between the limiting protrusions on the two different elastic buckling bodies decreases.

4. The encapsulation structure according to claim 3, wherein a side of the limiting protrusion away from the active member is a second contact surface, the second contact surface is an inclined surface or an arc surface, and a distance between the second contact surface and the elastic buckling bodies gradually decreases in a direction away from the active member.

5. The encapsulation structure according to claim 3, wherein a side of the main body away from the first assembling hole is provided with a second assembling hole in communication with the engaging cavity, the active member is rotatably provided in the second assembling hole, the end of the active member configured to extend into the engaging cavity is a push end, the push end is externally provided with a flange surrounding a position of the push end, the inner wall of the engaging cavity comprises a first wall and a second wall arranged oppositely, a communication point between the first assembling hole and the engaging cavity is located on the first wall, a communication point between the second assembling hole and the engaging cavity is located on the second wall, the inner wall of the engaging cavity is provided with a stop protrusion, a distance between the stop protrusion and the second wall is greater than a thickness of the flange, and the flange is provided with a notch allowing the stop protrusion to pass through.

6. The encapsulation structure according to claim 3, wherein when the limiting protrusion is located in the engaging cavity, the first contact surface abuts against the groove wall of the groove.

7. The encapsulation structure according to claim 3, wherein an inner diameter of the groove is less than or equal to a diameter of the first assembling hole.

8. The encapsulation structure according to any one of claims 1 to 7, further comprising a first sealing member and a second sealing member, the first sealing member being arranged between the decorative member and the main body, the first sealing member being arranged around the buckle, the second sealing member being arranged on the side of the main body away from the decorative member, and the second sealing member being arranged around the active member.

9. The encapsulation structure according to any one of claims 1 to 7, wherein the main body comprises an encapsulation, a glass plate, and a reinforcing member, the encapsulation is connected to an edge of the glass plate and the reinforcing member, respectively, the reinforcing member and the decorative member are located on two sides of the encapsulation, respectively, the engaging cavity and the first assembling hole are both arranged on the reinforcing member, the encapsulation is provided with an avoiding hole corresponding to the first assembling hole, and the buckle passes through the avoiding hole and the first assembling hole sequentially and extends into the engaging cavity.

10. A vehicle, comprising the encapsulation structure according to any one of claims 1 to 9.
